**Europäisches Patentamt**

**European Patent Office**

**Office européen des brevets**

Veröffentlichungsnummer: **0 432 383 A1**

# EUROPÄISCHE PATENTANMELDUNG

Anmeldenummer: 90117737.8

Anmeldetag: **14.09.90**

Int. Cl.5 **B64D 1/04, B64D 7 08**

Priorität: **14.12.89 DE 3941294**

Veröffentlichungstag der Anmeldung: **19.06.91 Patentblatt 91/25**

Benannte Vertragsstaaten: **FR GB SE**

Anmelder: **Messerschmitt-Bölkow-Blohm GmbH Robert-Koch-Strasse W-8012 Ottobrunn(DE)**

Erfinder: **Fischer, Manfred An der Ottosäule 13 W-8012 Ottobrunn(DE)**

Vorrichtung zum Verspannen einer Last.

Vorrichtung zum Verspannen einer Last mit Hilfe eines in einer Führung gleitenden Keils, der eine an die Last angepaßte Fläche und eine mit einer Vorrichtungsfläche gleichgerichtete Fläche aufweist und der mit einer federbelasteten Hubstange verbunden ist, wobei

- der Keil 8 mit der Hubstange 12 gelenkig verbunden ist, die in einem verschiebbaren Zylinder 11 gleitend gelagert ist, wobei der Innendurchmesser des Zylinders größer als der Durchmesser der Hubstange ist;
- in dem Ringraum zwischen der inneren Zylinderwand und der Hubstange 12 eine erste Feder 14 vorhanden ist, die unter Vorspannung einen fest auf der Hubstange angeordneten Bund 12a gegen einen dem Keil 8 zugewandten Zylinderflansch 11a drückt.
- eine zweite Feder 15 außen um den Zylinder 11 zwischen dem Zylinderflansch 11a und einem vorrichtungsfesten Ring 21 angeordnet ist:
- ein schwenkbarer vorrichtungsfest gelagerter Doppelhebel 13. dessen Drehpunkt 22a in der Zylinderachse 12b liegt. mit seinem oberen Arm 13a in zwei Stellungen arretierbar ist:
- gegen den unteren Arm 13b des Doppelhebels 13 eine dritte Feder 16 drückt die vorrichtungsfest gelagert ist,
- der Doppelhebel 13 in der einen Stellung den Zylinder 11 unverschiebbar verklemmt und in der anderen Stellung den Zylinder verschiebbar frei gibt.

FIG. 1

## VORRICHTUNG ZUM VERSPANNEN EINER LAST

Die Erfindung betrifft eine Vorrichtung zum Verspannen einer Last entsprechend dem Oberbegriff des Anspruchs 1.

Eine solche Vorrichtung ist durch die US-PS 3 268 188 bekannt. Dort wird eine Bombe oder eine andere Last mit Hilfe von Knaggen und einer Doppelhaken-Anordnung unter ein Flugzeug aufgehängt, wobei der Keil die Knaggen gegen die Haken durch Keilklemmung verspannt. Die Klemmung erfolgt mit einer unter Federdruck stehenden Hubstange. Bei dieser Vorrichtung besteht die Gefahr, daß sich der Keil in seiner Lagerung durch z.B. Vibration festfrißt und dann die Last schwer wieder gelöst werden kann.

Der Erfindung liegt die Aufgabe zugrunde, bei einer Vorrichtung der eingangs genannten Art die Keilklemmung derart auszuführen, daß der Keil auch durch Vibration oder sonstige Einflüsse nicht weiter in die Keilnut eingedrückt wird.

Diese Aufgabe wird durch die im Anspruch 1 gekennzeichneten Merkmale gelöst. Vorteilhafte Ausgestaltungen der Erfindung sind in den Unteransprüchen gekennzeichnet.

Der wesentliche Vorteil der Erfindung besteht darin, daß bei der Vorrichtung der Keil sich zwar im sicheren Bereich der Selbsthemmung befindet, weil er mit der ersten Feder zwischen der Keilfläche der Vorrichtung und der Last gehalten wird, er jedoch bei äußeren Einflüssen, wie z.B. Vibrationen, nicht weiter in die Keilnut eingedrückt werden kann. Dadurch wird eine undefinierbar große Kraft an den Keilflächen und eine eventuelle Kaltschweißung zwischen den Keilflächen vermieden.

Die Erfindung wird nachstehend an Hand einer in der Zeichnung schematisch dargestellten Ausführungsform näher erläutert. Es zeigen:

Fig. 1  eine Vorrichtung zum Verspannen einer Last beim Einführen der Last in die Vorrichtung;

Fig. 2  die Vorrichtung entsprechend Fig. 1 nach dem Verspannen der Last;

Fig. 3  die Vorrichtung entsprechend Fig. 1 vor dem Abgang der Last und

Fig. 4  die Vorrichtung entsprechend Fig. 1 beim Abgang der Last.

Eine Vorrichtung 1 wird von einem Gehäuse 2, das mit einer Führungsschiene 3 verbunden ist, umschlossen. Die Vorrichtung 1 ist z.B. in die Unterseite eines nicht dargestellten Flugzeugrumpfes eingebaut, wobei die Führungsschiene 3 aus der Rumpfunterseite herausragt. In die Führungsschiene 3 ist eine Last 4, z.B. ein Flugkörper, eingefahren. Innerhalb des Gehäuses 2 ist eine schräge Fläche 5 angeordnet, die als Gleitfläche für einen, mit einem Bolzen 6 innerhalb einer Führung 7 gleitenden Keil 8 dient. Der Keil 8 weist eine schräge Fläche 8a, die eine Neigung gleich der Fläche 5 aufweist und an dieser anliegt, und eine gerade Fläche 8b auf, die mit der Oberkantenfläche 4a der Last 4 zusammenwirkt. Der Keil 8 weist weiterhin eine Öse 8c auf. Im Gehäuse 2 ist im Zusammenwirken mit dem Keil 8 eine Klemmwippe 10 vorhanden. Diese besteht im wesentlichen aus einem Zylinder 11, einer Hubstange 12, einem Doppelhebel 13, einer ersten Feder 14, einer zweiten Feder 15 und einer dritten Feder 16. Die Hubstange 12 ist gleitend in dem Zylinder 11 gelagert, wobei ihre Längsbewegung durch einen Bund 12a begrenzt ist; ihr freies aus dem Zylinder 11 herausragendes Ende ist mit einem Gabelkopf 17 versehen der mit einem Bolzen 18 mit der Öse 8c des Keils 8 verbunden ist. Der Zylinder 11 wird auf einer Seite mit einem Stopfen 19, der als Lagerung für die Hubstange 12 dient und auf der anderen Seite mit einem Flansch 11a abgeschlossen Der Zylinder 11 wirkt mit dem Doppelhebel 13 so zusammen, daß er bei einem Verschwenken desselben in Richtung der Zylinderachse verschiebbar ist er kann aber auch, wie weiter unten an Hand des Funktionsablaufes erläutert wird, in einer Endstellung arretiert werden. Zwischen der Innenwand des Zylinders 11 und der Hubstange 12 ist die erste Feder 14 so vorgespannt eingebaut, daß die Hubstange 12 mit ihrem Bund 12a spielfrei am Zylinderflansch 11a anliegt. Außen am Zylinder 11 ist zwischen dem Zylinderflansch 11a und einem gehäusefesten Ring 21 die zweite Feder 15 eingebaut, deren Maximalkraft kleiner sein muß als die Vorspannkraft der ersten Feder 14. Der Doppelhebel 13 ist zwischen zwei gehäusefesten Flanschen 22 um den Drehpunkt 22a eingebaut, der auf der Achse 12b der Hubstange 12 liegt. Der obere Arm 13a des Doppelhebels 13 kann zwischen zwei Anschlagpunkten 23 und 24 geschwenkt und arretiert werden Der untere Arm 13b liegt an eine Kugelschale 25 an, die zusammen mit einem gehäusefesten Knaggen 26 als Lagerung für die dritte Feder 16 dient Die dritte Feder 16 muß so ausgelegt sein, daß ein sicheres Klemmen zwischen dem Doppelhebel 13 und dem Zylinder 11 gewährleistet ist.

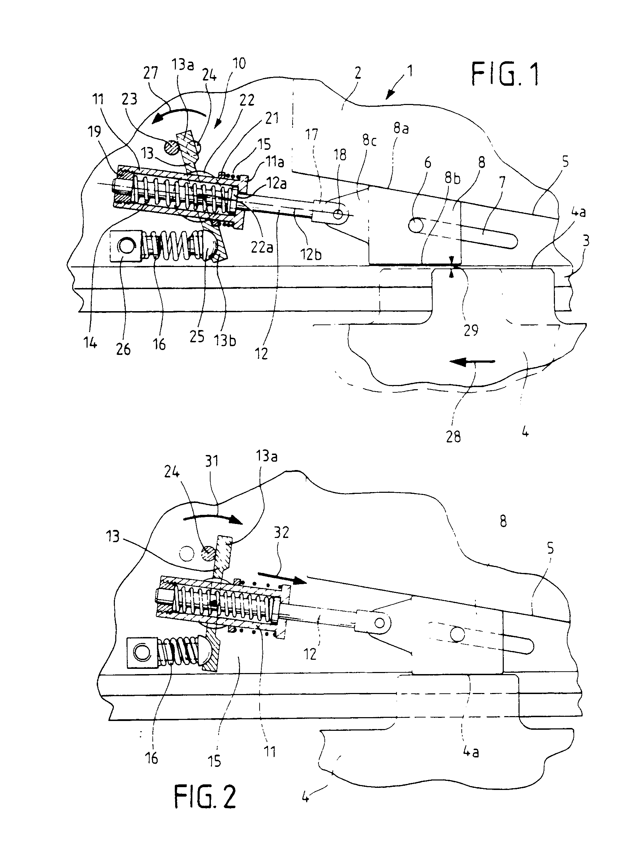

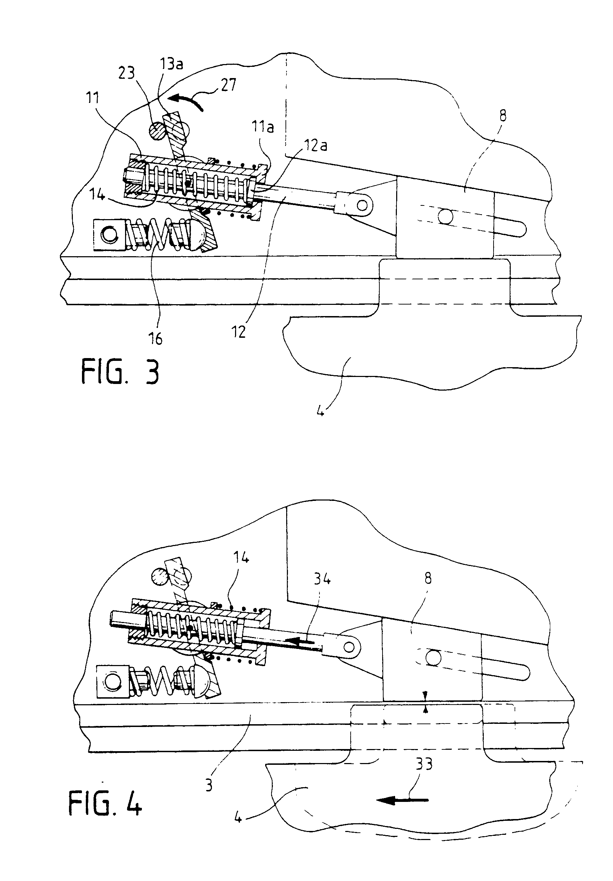

Nachstehend soll der Funktionsablauf mit der Vorrichtung 1 erläutert werden Der Doppelhebel 13 wird entsprechend Fig. 1 mit seinem Arm 13a in Richtung eines Pfeiles 27 gegen den Anschlagpunkt 23 gedrückt. Dabei nehmen der Zylinder 11 und der Keil 8 die dargestellte Lage ein, bei der die zweite Feder 15 zusammengedrückt wird. Bei dieser Ausgangslage wird die Last 4 in Richtung eines Pfeiles 28 in die Führungsschiene 3 eingefahren und bis in die gestrichelt dargestellte Lage vorgeschoben, wobei zwischen der unteren Keilfläche 8b und der oberen Lastfläche 4a ein Spalt 29 verbleibt. In dieser Lage wird die Last 4 in nicht dargestellter Weise festgesetzt. Zum Verspannen der Last 4 wird entsprechend Fig. 2 der Doppelhebel 13 nach hinten in Richtung eines Pfeiles 31 gedrückt, wobei der obere Hebelarm 13a hinter den Anschlagpunkt 24 festgesetzt wird. Dabei wird der Zylinder 11, die Hubstange 12 und der Keil 8 in die Richtung eines Pfeiles 32 gedrückt, wodurch der Keil 8 spielfrei zwischen die Gehäusefläche 5 und die Lastoberfläche 4a zum Anschlag kommt. Dabei wird die zweite Feder 15 entspannt und die dritte Feder 16 zusammengedrückt. Zur Vorbereitung des Lastabganges wird entsprechend Fig. 3 der Doppelhebelarm 13a wieder in Richtung des Pfeiles 27 an den Anschlag 23 zurückgedrückt. Dabei wird der Zylinder 11 durch die dritte Feder 16 in seiner ursprünglichen Lage zurückgehalten. Die Vorspannkraft der ersten Feder 14 hält den Keil 8 spielfrei in seiner Lage. Letzterer kann jedoch bei Aufweitung der Keilnut durch Vibrationen usw. nicht tiefer eindringen, da der Bund 12a der Hubstange 12 am Flansch 11a des Zylinders 11 anliegt. Wenn die Last 4 an ihren Festsetzungspunkten gelöst ist und, z.B. bei einem Flugkörper durch eigene Schubkraft, in Richtung eines Pfeiles 33 auf der Führungsschiene 3 geschoben wird, wird auch der Keil 8 gegen die Kraft der ersten Feder 14 ein Stück in Richtung eines Pfeiles 34 mitgenommen bis nach dem Entstehen eines kleinen Spaltes 35 zwischen dem Keil 8 und der Last 4 letztere ungehindert die Führungsschiene 3 verlassen kann. Die gestrichelte Linie der Last 4 zeigt die festgesetzte Stellung entsprechend den Fig. 2 und 3 an.

## Ansprüche

1. Vorrichtung zum Verspannen einer Last mit Hilfe eines in einer Führung gleitenden Keils, der eine an die Last angepaßte Fläche und eine mit einer Vorrichtungsfläche gleichgerichtete Fläche aufweist und der mit einer federbelasteten Hubstange verbunden ist, **gekennzeichnet** durch die nachfolgenden Merkmale:
   - der Keil (8) ist mit der Hubstange (12) gelenkig verbunden, die in einem verschiebbaren Zylinder (11) gleitend gelagert ist, wobei der Innendurchmesser des Zylinders größer als der Durchmesser der Hubstange ist;
   - in dem Ringraum zwischen der inneren Zylinderwand und der Hubstange (12) ist eine erste Feder (14) vorhanden, die unter Vorspannung einen fest auf der Hubstange angeordneten Bund (12a) gegen einen dem Keil (8) zugewandten Zylinderflansch (11a) drückt;
   - eine zweite Feder (15) ist außen um den Zylinder (11) zwischen dem Zylinderflansch (11a) und einem vorrichtungsfesten Ring (21) angeordnet;
   - ein schwenkbarer vorrichtungsfest gelagerter Doppelhebel (13), dessen Drehpunkt (22a) in der Zylinderachse (12b) liegt, ist mit seinem oberen Arm (13a) in zwei Stellungen arretierbar;
   - gegen den unteren Arm (13b) des Doppelhebels (13) drückt eine dritte Feder (16), die vorrichtungsfest gelagert ist.
   - der Doppelhebel (13) verklemmt in der einen Stellung den Zylinder (11) unverschiebbar und gibt in der anderen Stellung den Zylinder verschiebbar frei.

2. Vorrichtung nach Anspruch 1, **dadurch gekennzeichnet**, daß die Kraft der zweiten Feder (15) kleiner ist als die Vorspannkraft der ersten Feder (14).

3. Vorrichtung nach Anspruch 1, **dadurch gekennzeichnet**, daß die Kraft der dritten Feder (16) ausreicht, um den Doppelhebel (13) und den Zylinder (11) in seiner jeweiligen Lage zu halten.

FIG. 1

FIG. 2

FIG. 3

FIG. 4

**Europäisches Patentamt**

# EUROPÄISCHER RECHERCHENBERICHT

Nummer der Anmeldung

## EP 90 11 7737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 284 520 (SOCIETE ANONYME R. ALKAN & CIE.) <br> " Seite 1, Zeilen 22 - 26 " " Seite 3, Zeilen 5 - 37 " " Figuren " <br> — — — | 1-3 | B 64 D 1 04 <br> B 64 D 7 08 |
| A | US-A-3 854 681 (HASQUENOPH ET AL.) <br> " Spalte 1, Zeilen 43 - 57 " " Spalte 2, Zeilen 40 - 56 " " Figuren " <br> — — — | 1-2 | |
| A | FR-A-2 130 702 (UNITED KINGDOM OF GREAT BRITAIN AND NORTHERN IRELAND) <br> " Seite 2, Zeilen 1 - 7 " " Seite 3, Zeilen 14 - 28 @ Seite 4, Zeilen 12 - 35 @ Figuren " <br> — — — | 1-2 | |
| A | EP-A-0 296 010 (R. ALKAN & CIE.) <br> " Spalte 4, Zeilen 7 - 12 " " Spalte 4, Zeilen 42 - 59 " " Figuren " <br> — — — | 1-2 | |
| A,D | US-A-3 268 188 (E.T. LA ROE) <br> " Figur 3 " <br> — — — — — | 1-2 | |

| RECHERCHIERTE SACHGEBIETE (Int. Cl.5) |
|---|
| B 64 D |

Der vorliegende Recherchenbericht wurde für alle Patentansprüche erstellt

| Recherchenort | Abschlußdatum der Recherche | Prüfer |
|---|---|---|
| Den Haag | 14 März 91 | ESTRELA Y CALPE J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument